# EUROPEAN PATENT SPECIFICATION

(11) **EP 3 952 649 B1**
(45) Date of publication and mention of the grant of the patent: **10.05.2023**
(21) Application number: 20713505.4
(22) Date of filing: 30.03.2020
(51) Int. Cl.: A01N 31/02, A01N 45/00, A01P 21/00

(54) **USE OF A COMPOSITION TO PREVENT OR LIMIT THE OCCURENCE OF LESIONS ON FRUIT EPIDERMIS**
VERWENDUNG EINER ZUSAMMENSETZUNG ZUR VERHINDERUNG ODER BEGRENZUNG DES AUFTRETENS VON LÄSIONEN AN DER OBERHAUT VON FRÜCHTEN
UTILISATION D'UNE COMPOSITION POUR PRÉVENIR OU LIMITER L'APPARITION DE LÉSIONS SUR L'ÉPIDERME DES FRUITS

(30) Priority: 08.04.2019 IT 201900005348
(43) Date of publication of application: 16.02.2022
(73) Proprietor: ORIUS S.r.l., 39100 Bolzano (IT)
(72) Inventor: Miglio, Giovanni, 40051 Altedo (Bologna) (IT)
(74) Representative: Biggi, Cristina
(86) International application number: PCT/IB2020/052994
(87) International publication number: WO 2020/208460

(56) References cited:
- WO-A1-01/62080
- B. K. TAYLOR: "Effects of Gibberellin Sprays on Fruit Russet and Tree Performance of Golden Delicious Apple", JOURNAL OF HORTICULTURAL SCIENCES., vol. 53, no. 3, 27 January 1978 (1978-01-27), pages 167-169, XP055618533, GB ISSN: 0022-1589, DOI: 10.1080/00221589.1978.11514814

## Description

The present invention relates to the use of a composition comprising polyethylene glycol to prevent and/or limit the occurrence of lesions on the epidermis of fruits.

### PRIOR ART

During their development, generally during the period comprised between the end of flowering and harvest, the fruits of many spontaneous or cultivated plants undergo a growth in volume that can vary from a few dozen to several hundred times.

As a typical example of fruit growth dynamics, one may mention the case of apples, deemed representative for many other types of fruit.

In a large majority of cases, when apples have reached a diameter of 10-12 millimeters, the number of cells making up the fruit is nearly identical to that found at harvest time. In other words, starting from a period of generally early development, the growth in volume of fruits is due not so much to cellular multiplication and the production of new cells, but rather to phenomena of lengthening and expansion of the cells already present. As a result of this state of things, growing fruits are subjected to a series of stresses whose maximum entity is to be found in the most superficial part, namely, the epidermis, commonly known by the term peel or skin.

For the aforesaid reasons, above all in fruits with a thin epidermis, during the phases of most intense growth, miniscule fractures or lesions are easily created which, in contact with air and atmospheric agents, tend to become altered to a varying degree.

First evidence of this phenomenon is given by the change in the color and texture of the peel, which from shiny and smooth tends to become dull and/or rough. A subsequent and frequent evolution consists in the formation of cracks that may be more or less widespread, and which in contact with air and atmospheric agents tend to take on a russet-colored appearance, giving rise to a phenomenon known as russetting.

Also in the absence of subsequent alterations, the presence of russetting can represent a very serious source of damage. In the case of many species and varieties, in fact, the market prefers fruits with a smooth, shiny epidermis. Limiting the example to apples, fruits with widespread phenomena of cracking and/or russetting, variety and size being equal, can have a commercial value that is 25-50% less compared to top grade fruits, resulting in a huge economic loss for producers.

Leaving aside the aesthetic factor, the aforementioned alterations of the fruit epidermis can also give rise to further serious problems.

A first problem is because fruits with an altered epidermis are subject to greater water losses than perfectly intact fruits. This means a shorter storage life inside cold rooms, resulting in weight loss and an increase in phenomena of withering at the end of the storage period.

Furthermore, in the case of thin-skinned fruits such as cherries, as well as several varieties of eating grapes, apricots, peaches, strawberries and apples, the surface lesions of the epidermis can lead to localized weakening which, in some circumstances, for example heavy rainfall or irrigation prior to harvest, is capable of evolving into splits of varying depth, giving rise to the phenomenon known as cracking, which results in the immediate loss of the fruits still hanging.

Several practices, described below, are commonly adopted to reduce the above-described phenomena; they are not, however, devoid of drawbacks.

A first measure commonly used on hanging apples during the stage of development consists in repeated applications of sulfur compounds in liquid or powder form, to which a certain cosmetic power on the epidermis is attributed.

A second and more sophisticated solution consists in the early application, on hanging fruits, of plant hormones known by the name of gibberellins, which favor cell expansion, thereby contributing to a greater elasticity of the epidermis. Gibberellins constitute a large family of plant hormones, of which various forms are known, distinguished by different codes and numbers. The most widely used in agriculture are the gibberellins called GA3 (=gibberellic acid) or the gibberellins GA4+GA7, commercially available in a mixture in the form of an aqueous solution with 1-2% by volume of active substances, to be diluted in water until obtaining concentrations of 0.0000025-0.0001% by volume of active substances before administration to plants by means of specific spraying apparatus.

A first drawback of the above-described treatments consists in their limited effectiveness, i.e. their limited ability to reduce the intensity and extent of russetting phenomena compared with control plots treated with water alone.

A second drawback is given by the fact that the aforesaid products belong to the category of pesticides and, as such, are subject to a wide range of usage limitations, due also to the presence of residues of chemical substances that such products leave on the fruits, as well as very high regulatory costs.

Furthermore, the increasing attention of consumers to the purchase and consumption of foods perceived as healthy effectively places products treated with pesticides in a segment perceived as unhealthy for the human diet.

WO 01/62080 and "Effects of Gibberellin Sprays on Fruit Russet and Tree Performance of Golden delictions Apple", Journal of Horticultural Sciences, 1978, vol 53, no. 3, pages 167-169 disclose methods of reducing russetting in fruit by applying gibberellin acids.

In this context, the principal object of the present invention is to provide a product endowed with an effectiveness that is equal to and/or greater than that of known products for preventing and/or limiting the occurrence of lesions on the epidermis of fruits. Within the scope of this task, one object of the invention is to provide a product that can be used to prevent and/or limit phenomena of russetting and cracking.

A further object of the invention is to provide a product that is capable of achieving the above-mentioned effects and has a low impact and/or is innocuous for humans and/or the environment.

### SUMMARY OF THE INVENTION

The present invention is defined in the appended independent claim and relates to the use of an aqueous composition comprising about 0.001-1.0 vol.% of at least one polyethylene glycol to prevent and/or limit the occurrence of lesions on the epidermis of fruits.

Preferred embodiments of the invention are described in the appended dependent claims.

### DETAILED DESCRIPTION OF THE INVENTION

In the context of the present description and in the appended claims, the term epidermis or peel refers to the outermost layer of the epicarp of the fruit.

In the context of the present description and in the appended claims, the terms ambient pressure and temperature refer respectively to the pressure and temperature of the air in the place where use takes place. The ambient pressure is generally about 1 atm. The ambient temperature is generally 15-35°C.

In the context of the present description and in the appended claims, the volume percentages of the components refer to the total volume of the composition.

The invention relates to the use of an aqueous composition comprising about 0.001-1.0 vol.% of at least one polyethylene glycol to prevent and/or limit the occurrence of lesions on the epidermis of fruits.

Polyethylene glycol (o PEG) is a polymer of ethylene oxide having the general formula

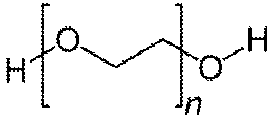

Depending on the number *n* of monomeric units, the molecular weight of polyethylene glycol can range from a few hundred Daltons, in which case it appears as a fluid colorless liquid, to several thousand Daltons, where it takes on the appearance of a white- or greyish-colored waxy solid.

Irrespective of the molecular weight, polyethylene glycol is considered an inert substance from a chemical viewpoint and thus scarcely reactive and nontoxic. For this reason PEG is used in various sectors. Low molecular weight PEGs (approx.. 300-400 Da) are frequently employed as inert excipients for drugs intended for intramuscular injections, whereas those of a higher molecular weight, in the order of several thousand Daltons, constitute the basis for the preparation of common laxatives taken orally. PEGs of an even higher molecular weight and high density are used as thickeners for syrups, pill coatings and as additives in the food industry.

The aqueous composition for use according to the present invention preferably comprises polyethylene glycol with a number average molecular weight (Mn) of about 800-20000 Da, preferably about 1000-15000 Da. The aqueous composition preferably comprises a mixture of polyethylene glycols each having a different number average molecular weight Mn.

PEGs are also used in numerous industrial formulations of pesticides and biocides. However, as they are by definition substances that are practically inert from a chemical viewpoint, their function in such compounds is normally that of excipients, thickeners, plasticizers, and/or adhesive agents.

In one embodiment, the present invention relates to the use of an aqueous composition comprising polyethylene glycol, as the sole active ingredient, to prevent and/or limit the occurrence of lesions on the epidermis of the fruits.

According to this first embodiment, the aqueous composition is further characterized in that it does not comprise additional plant protection products.

In a further embodiment, the aqueous composition can further comprise at least one gibberellin, preferably in an amount of about 0.000001-0.001 vol.%, preferably about 0.000001-0.0001 vol.%, more preferably about 0.000002-0.00001 vol.%. The gibberellins can preferably be selected in the group consisting of GA3, GA4, GA7 and combinations thereof; the gibberellin is preferably a mixture of GA4 and GA7.

The aqueous composition as described above can comprise at least one further additive selected in the group consisting of dyes, olfactory tracers, plasticizers, adhesive agents, runoff reducing agents, anti-fermentatives, surfactants, solar radiation filters and combinations thereof, preferably in a total amount of about 0.0001- 0.5 vol.%.

In a preferred embodiment, the additive can be selected from the group consisting of triacetin, triethyl citrate, shellac, wax, preferably beeswax, and combinations thereof, in the amounts specified above.

In one embodiment, the aqueous composition for use according to the present invention can consist of:
(a) 0.001-1.0 vol.% of at least one polyethylene glycol as described above;
(c) 0.0001-0.5 vol.% of at least one additive as described above; and
(d) water to 100 vol.%.

In a further embodiment, the aqueous composition can consist of:
(a) 0.001-1.0 vol.% of at least one polyethylene glycol as described above;
(b) 0.000001-0.001 vol.%, preferably 0.000001-0.0001 vol.%, more preferably 0.000002-0.00001 vol.%, of at least one gibberellin as described above;
(c) 0.0001-0.5 vol.% of at least one additive as described above; and
(d) water to 100 vol.%.

For the preparation of the aqueous composition, water with any degree of purity can be used, including mains water and the water normally used for the irrigation of cultivated land. The polyethylene glycol and, optionally, the gibberellin and/or the at least one further additive can be added to the water at ambient temperature and pressure, under stirring, using apparatus that are in themselves known in the art and will thus not be further described herein. The aqueous composition can preferably be a solution.

The aqueous composition can be placed on the market in a ready-to-use form, or else in a form wherein the at least one polyethylene glycol and, optionally, the at least one gibberellin and the at least one additive are present in the concentrations specified above. Alternatively, and preferably, the aqueous composition can be placed on the market in a concentrated form, so as to be suitably diluted at the time of use.

The composition can be used for the treatment of fruits generated by fruit-bearing bushes or trees, either spontaneous or cultivated. The aqueous composition can preferably be used to prevent and/or limit the occurrence of lesions on the epidermis of fruits generated by at least one plant belonging to a family selected from the group consisting of Rosaceae, Vitaceae and Rutaceae; the fruits can preferably be selected from the group consisting of apples, pears, cherries, apricots, peaches, strawberries, grapes, citrus fruits and combinations thereof.

The effectiveness of the aqueous composition comprising polyethylene glycol in preventing and/or limiting the occurrence of lesions on the epidermis of fruits was observed both by treating field-grown plants on which there were fruits at different degrees of development and by treating fruits after harvesting.

The aqueous composition can be used to prevent and/or limit the occurrence of lesions on the epidermis of fruits by distributing the aqueous composition on the aerial part of at least one fruit-bearing plant, preferably in quantities of about 150-3000 l/ha, preferably in the time interval comprised between fruit setting and harvesting.

The aqueous composition can be used in the treatment of plants in an open field or in a greenhouse. The aerial part of the plants on which to apply the composition can be selected from the shaft, leaves, buds, flowers, fruits and combinations thereof.

For the treatment use can be made of apparatus normally employed for that purpose to spray the aerial part of plants with aqueous compositions, for example a motor-driven pump.

In consideration of the low hazardousness of polyethylene glycol for humans and/or the environment, the use according to the present invention can advantageously be repeated any time it is necessary, during the whole phase of fruit development comprised between the end of flowering, called setting, and harvesting of the fruits.

In one embodiment, 3 to 20 treatments can be carried out, each of which can preferably be carried out 7-12 days after the previous treatment.

In a further embodiment, the aqueous composition can be used to treat harvested fruits by immersing at least one harvested fruit in the aqueous composition, preferably for a time comprised from about 20 seconds to about 30 minutes.

The use of the aqueous composition according to the invention enables the aesthetic appearance of fruits to be improved by preventing and/or limiting the phenomena of russetting and/or cracking of the epidermis and advantageously increasing the quality of the product.

As the surface of the fruits has fewer alterations, the storage life of the harvested fruits treated with the composition according to the invention is also better, i.e. the fruits can be stored for a longer time than untreated fruits.

Furthermore, since polyethylene glycol has a low level of toxicity for humans, the use thereof on products intended for human consumption does not pose problems related to the intake of harmful substances by consumers.

The environmental compatibility of PEG ensures that using the aqueous composition in the field is safe and has a low environmental impact.

The invention is described below with some examples that are provided solely for illustrative purposes and do not intend to limit the subject matter of the present invention in any way.

### Example 1

A mixture consisting of equal parts by weight of PEG800, PEG2000, PEG4000 and PEG10000 was dissolved in water at different concentrations and sprayed on the vegetation of apple trees of the Golden Delicious variety 12 times at regular intervals of about 10 days, starting from the end of flowering and until the fruit harvest period. The results of the trial, recorded at harvest time, are shown in table 1.

**Table 1**

| PEG vol.% (**) | average % of russetted surface | % effectiveness (***) |
|---|---|---|
| 0.001 | 29.0 | 21.6 |
| 0.01 | 18.0 | 51.3 |
| 0.1 | 14.6 | 60.5 |
| 0 = water control plot | 37.0 | 0 |

| | | |
|---|---|---|
| (**) total amount of PEG800+PEG2000+PEG4000+PEG10000 (***) % reduction of damage versus the control plot, the damage in the control plot being set =100 and effectiveness = 0. | | |

### Example 2

In a second trial conducted on apple trees, the same composition as in example 1 was used on its own and in combination with two different doses of gibberellins GA4+GA7. The composition was distributed over the aerial part of the plant starting from the end of flowering, for a total of 5 treatments carried at intervals of ten days from one another. The results of the trial are shown in table 2.

**Table 2**

| test plot s | product | vol. % | average % of russetted surface | % effectiveness (***) |
|---|---|---|---|---|
| 01 | Water control plot | - | 41.0 | 0 |
| 02 | PEG | 0.01 (**) | 28.5 | 30.5 |
| 03 | Gibberellins A4+A7 | 0.000005 | 27.5 | 32.9 |
| 04 | Gibberellins A4+A7 | 0.0000025 | 33.5 | 18.3 |
| 05 | PEG + Gibberellins A4+A7 | 0.01 (**) + 0.000005 | 12.1 | 70.5 |
| 06 | PEG + Gibberellins A4+A7 | 0.01 (**) + 0.0000025 | 16.7 | 59.2 |

| | | | | |
|---|---|---|---|---|
| (**) total amount of PEG800+PEG2000+PEG4000+PEG10000. (***) % of reduction of damage versus the control plot, the damage in the control plot being set =100 and effectiveness = 0. | | | | |

Test plots 5 and 6 show a synergism equal to 7.1 and 10.4, respectively, wherein the synergism is expressed as the difference between the effectiveness (% reduction of damage versus the control plot) of the products present in combination in the composition (test plots 5 and 6) and the sum of the effectiveness of the corresponding products administered individually (test plots 2+3 and test plots 2+4).

### Example 3

In a third trial, use was made of an aqueous composition at a concentration of 1.0% by volume, consisting of equal parts by weight of PEG2000, PEG10000 and PEG20000, supplemented with triacetin at 0.05% by volume and liquid shellac at 0.25% by volume.

Said composition was applied three times on cherry trees of the Ferrovia variety at intervals of about 7 days between the onset of ripening, i.e. the period in which the fruits change color from green to red, and pre-harvest. The results of the trial are shown in table 3.

**Table 3**

| test plot s | Product | % fruits with cracking at harvest time |
|---|---|---|
| 01 | Water control plot | 17.0 |
| 02 | PEG (**) + triacetin + shellac | 6.0 |

| | | |
|---|---|---|
| (**) total amount of PEG2000+PEG4000+PEG10000 | | |

## Claims

1. Use of an aqueous composition comprising 0.001-1.0 vol.% of at least one polyethylene glycol to prevent and/or limit the occurrence of lesions on the epidermis of fruits.

2. Use according to claim 1, wherein the polyethylene glycol has a number average molecular weight of 800-20,000 Da.

3. Use according to any one of the preceding claims, wherein the aqueous composition also comprises at least one gibberellin, preferably in an amount of 0.000001-0.001 vol.%, preferably 0.000001-0.0001 vol.%, more preferably 0.000002-0.00001 vol.%.

4. Use according to any one of the preceding claims, wherein the gibberellin is selected from the group consisting of GA3, GA4, GA7 and combinations thereof, preferably being a mixture of GA4 and GA7.

5. Use according to any one of the preceding claims, wherein the aqueous composition comprises at least one additional additive selected from the group consisting of dyes, olfactory tracers, plasticizers, adhesive agents, runoff reducing agents, anti-fermentatives, surfactants, solar radiation filters and combinations thereof, preferably in an amount of 0.0001-0.5 vol.%.

6. Use according to claim 5, wherein the additive is selected from the group consisting of triacetin, triethylcitrate, shellac, wax, preferably beeswax, and combinations thereof.

7. Use according to any one of the preceding claims, wherein the fruits are generated from at least one plant belonging to a family selected from the group consisting of Rosaceae, Vitaceae and Rutaceae, preferably said fruits are selected from the group consisting of apples, pears, cherries, apricots, peaches, strawberries, grapes, citrus fruits and combinations thereof.

8. Use according to any one of claims 1-7, comprising distributing the aqueous composition on the aerial part of at least one fruit plant, preferably in quantities of 150-3000 l/ha, preferably in the time interval between fruit setting and harvesting.

9. Use according to any one of claims 1-7, comprising soaking at least one harvested fruit in the aqueous composition, preferably for a time between 20 seconds and 30 minutes.

10. Use according to any one of the preceding claims to prevent and/or limit the phenomena of russeting and/or cracking on the epidermis of fruits.

## Patentansprüche

1. Verwendung einer wässrigen Zusammensetzung, die 0,001-1,0 Vol.-% mindestens eines Polyethylenglykols umfasst, um das Auftreten von Läsionen an der Oberhaut von Früchten zu verhindern und/oder zu begrenzen.

2. Verwendung nach Anspruch 1, wobei das Polyethylenglykol ein zahlenmittleres Molekulargewicht von 800-20.000 Da aufweist.

3. Verwendung nach einem der vorhergehenden Ansprüche, wobei die wässrige Zusammensetzung auch mindestens ein Gibberellin umfasst, vorzugsweise in einer Menge von 0,000001-0,001 Vol.-%, vorzugsweise 0,000001-0,0001 Vol.-%, bevorzugter 0,000002-0,00001 Vol.-%.

4. Verwendung nach einem der vorhergehenden Ansprüche, wobei das Gibberellin aus der Gruppe bestehend aus GA3, GA4, GA7 und Kombinationen davon ausgewählt ist, wobei es sich vorzugsweise um eine Mischung von GA4 und GA7 handelt.

5. Verwendung nach einem der vorhergehenden Ansprüche, wobei die wässrige Zusammensetzung mindestens einen zusätzlichen Zusatzstoff, ausgewählt aus der Gruppe, bestehend aus Farbstoffen, Geruchstracern, Weichmachern, Klebemitteln, Abflussreduzierungsmitteln, Gärung verhindernden Mitteln, Tensiden, Sonnenstrahlungsfiltern und Kombinationen davon, vorzugsweise in einer Menge von 0,0001-0,5 Vol.-% umfasst.

6. Verwendung nach Anspruch 5, wobei der Zusatzstoff aus der Gruppe bestehend aus Triacetin, Triethylcitrat, Schellack, Wachs, vorzugsweise Bienenwachs, und Kombinationen davon ausgewählt ist.

7. Verwendung nach einem der vorhergehenden Ansprüche, wobei die Früchte von mindestens einer Pflanze erzeugt werden, die zu einer Familie gehört, die aus der Gruppe ausgewählt ist, die aus Rosaceae, Vitaceae und Rutaceae besteht, wobei die Früchte vorzugsweise aus der Gruppe ausgewählt sind, die aus Äpfeln, Birnen, Kirschen, Aprikosen, Pfirsichen, Erdbeeren, Trauben, Zitrusfrüchten und Kombinationen davon besteht.

8. Verwendung nach einem der Ansprüche 1-7, umfassend das Verteilen der wässrigen Zusammensetzung auf dem oberirdischen Teil mindestens einer Fruchtpflanze, vorzugsweise in Mengen von 150-3000 l/ha, vorzugsweise in dem Zeitintervall zwischen dem Setzen und Ernten der Früchte.

9. Verwendung nach einem der Ansprüche 1-7, umfassend das Einweichen mindestens einer geernteten Frucht in der wässrigen Zusammensetzung, vorzugsweise für einen Zeitraum zwischen 20 Sekunden und 30 Minuten.

10. Verwendung nach einem der vorhergehenden Ansprüche zur Verhinderung und/oder Begrenzung der Phänomene der Berostung und/oder Rißbildung an der Oberhaut von Früchten.

## Revendications

1. Utilisation d'une composition aqueuse comprenant 0,001-1,0 % en volume d'au moins un polyéthylène glycol pour prévenir et/ou limiter l'apparition de lésions sur l'épiderme des fruits.

2. Utilisation selon la revendication 1, dans laquelle le polyéthylène glycol a un poids moléculaire moyen en nombre de 800-20 000 Da.

3. Utilisation selon l'une quelconque des revendications précédentes, dans laquelle la composition aqueuse comprend également au moins une gibbérelline, de préférence en une quantité de 0,000001-0,001 % en volume, de préférence de 0,000001-0,0001 % en volume, plus préférablement de 0,000002-0,00001 % en volume.

4. Utilisation selon l'une quelconque des revendications précédentes, dans laquelle la gibbérelline est choisie dans le groupe constitué par GA3, GA4, GA7 et leurs combinaisons, étant de préférence un mélange de GA4 et GA7.

5. Utilisation selon l'une quelconque des revendications précédentes, dans laquelle la composition aqueuse comprend au moins un additif supplémentaire choisi dans le groupe constitué par les colorants, les traceurs olfactifs, les plastifiants, les agents adhésifs, les agents réducteurs de ruissellement, les anti-fermentatifs, les tensioactifs, les filtres de rayonnement solaire et leurs combinaisons, de préférence en une quantité de 0,0001-0,5 % en volume.

6. Utilisation selon la revendication 5, dans laquelle l'additif est choisi dans le groupe constitué par la triacétine, le triéthylcitrate, la gomme-laque, la cire, de préférence la cire d'abeille, et leurs combinaisons.

7. Utilisation selon l'une quelconque des revendications précédentes, dans laquelle les fruits sont générés à partir d'au moins une plante appartenant à une famille choisie dans le groupe constitué par les Rosaceae, Vitaceae et Rutaceae, de préférence lesdits fruits sont choisis dans le groupe constitué par les pommes, les poires, les cerises, les abricots, les pêches, les fraises, les raisins, les agrumes et leurs combinaisons.

8. Utilisation selon l'une quelconque des revendications 1-7, comprenant la distribution de la composition aqueuse sur la partie aérienne d'au moins une plante fruitière, de préférence en quantités de 150-3 000 l/ha, de préférence dans l'intervalle de temps entre la nouaison et la récolte des fruits.

9. Utilisation selon l'une quelconque des revendications 1-7, comprenant le trempage d'au moins un fruit récolté dans la composition aqueuse, de préférence pendant une durée comprise entre 20 secondes et 30 minutes.

10. Utilisation selon l'une quelconque des revendications précédentes pour prévenir et/ou limiter les phénomènes de rugosité et/ou de fissuration de l'épiderme des fruits.
